# EUROPEAN PATENT SPECIFICATION

(11) **EP 1 595 721 B1**
(45) Date of publication and mention of the grant of the patent: **01.07.2009**
(21) Application number: 05006452.6
(22) Date of filing: 23.03.2005
(51) Int. Cl.: B60B 21/06, B60B 1/04

(54) **Bicycle rim**
Fahrradfelge
Jante de bicyclette

(30) Priority: 11.05.2004 JP 2004141347
(43) Date of publication of application: 16.11.2005
(73) Proprietor: SHIMANO INC., Osaka 590-8577 (JP)
(72) Inventor: Okajima, Shinpei, Izumi Osaka (JP)
(74) Representative: Hofmann, Harald

(56) References cited:
- EP-A- 1 207 053
- EP-A- 1 475 246
- DD-A1- 155 602
- DE-A1- 4 143 380
- US-A- 5 597 529
- US-A- 5 620 652
- US-B1- 6 431 658

## Description

### CROSS-REFERENCE TO RELATED APPLICATIONS

This application claims priority to Japanese Patent Application No. 2004-141347. The entire disclosure of Japanese Patent Application No. 2004-141347 is hereby incorporated herein by reference.

### BACKGROUND OF THE INVENTION

### Field of the Invention

The present invention generally relates to a bicycle rim. More specifically, the present invention relates to a bicycle rim including aluminum, scandium and optionally zirconium.

### Background Information

Bicycle riding is becoming increasingly popular as both a means of transportation and a form of recreation. It is also quite popular as a competitive sport on both the professional and amateur levels. Regardless of the purpose for which the bicycle is ridden, the bicycle industry is continually making improvements to the frame for such bicycles and to the component parts used. One of the bicycle parts that has undergone substantial design revision is the wheel of the bicycle. Bicycle wheels are continually undergoing design modifications to make them easier to manufacture and assemble, as well as stronger, lighter and more aerodynamic.

Various types of bicycle wheels are being sold on the market at present. Many bicycle wheels include a hub, multiple spokes and an annular rim. The hub is rotatably mounted to a part of the bicycle frame. The inner end of each spoke is connected to the hub and the spokes extend outward from the hub. The annular rim is connected to the outer ends of the spokes and includes an outer circumferential part that supports a pneumatic tire. In general, the spokes of a bicycle wheel are thin wire spokes. A flange that connects the spokes to the hub is normally formed at both ends of the hub. Specifically, holes are formed in the hub flanges. The inner ends of the wire spokes are normally bent, and a toe-shaped flange is formed in the area of such ends. The interior end of each spoke is supported in a hole formed in one hub flange. In general, the outer end of each spoke is threaded such that the outer end can engage with a spoke nipple that secures the outer end of the wire spoke to the rim hole.

In order to make it lightweight, the rim used in this type of bicycle wheel is usually made of aluminum alloy, and is sought to be made as thin as possible. However, making the rim thin results in a reduction in strength, particularly in the relatively high-stress areas around each spoke hole.

Accordingly, as disclosed in Published U.S. Patent Application 2001-0005099 for example, the spoke hole areas have been processed via burring while heat is applied thereto. Alternatively, bicycle rims have been provided with separate reinforcement members that are removably mounted at the spoke openings to increase the strength of the rim at these areas (e.g. such as disclosed in Japanese Patent Laid-Open Nos. 2003-182302 and 2003-019901.

While these rims work relatively well, they do suffer from some deficiencies. For example, when applying a method to make the areas around spoke holes thicker via burring during the application of heat as disclosed in the patent document referred to above, the aluminum crystal grains can become coarse when the aluminum crystals re-form during the heat application stage, potentially making the aluminum prone to cracking when stress is applied thereto. Therefore, the temperature must be strictly monitored when heat is applied, making manufacturing relatively difficult and increasing the cost thereof. Document DD 155 602 describes a rim with reinforcement members according to the preamble of the first claim.

In view of the above, it will be apparent to those skilled in the bicycle art from this disclosure that there exists a need for an improved rim that overcomes the problems in the prior art. This invention addresses this need in the bicycle art as well as other needs, which will become apparent to those skilled in the bicycle art from this disclosure.

### SUMMARY OF THE INVENTION

One object of the present invention is to provide a bicycle rim that is relatively lightweight while maintaining strength, especially in the areas around the spoke holes.

Another object of the present invention is to provide a bicycle rim that is relatively simple and inexpensive to manufacture (i.e. easier to manufacture) and assemble.

The foregoing objects can basically be attained by providing a bicycle rim in accordance with a first aspect of the present invention. The bicycle rim in accordance with the first aspect of the present invention includes an annular tire mounting part and an annular spoke mounting part. The annular tire mounting part is configured to have a tire mounted thereto. The annular spoke mounting part includes multiple mounting openings disposed at predetermined intervals along a circumferential direction thereof. The tire mounting part and the spoke mounting part include aluminum and scandium.

With this configuration, the spoke mounting areas, including the mounting holes in particular, are formed from an alloy comprising aluminum to which scandium is added (i.e. Al₃Sc). This Al₃Sc serves the function of creating a pinning effect regarding aluminum grain boundaries (recrystallization inhibition effect), whereby cracking can be minimized even when heat is applied to the spoke hole areas.

In accordance with a second aspect of the present invention, the tire mounting part and the spoke mounting part of the bicycle rim include scandium within a range from 0.05% to 1.0% by weight.

If the added scandium amount added is less than 0.05% by weight, the recrystallization inhibition effect is insufficient. On the other hand, the recrystallization inhibition effect is fully achieved if such amount reaches 1.0% by weight. Thus, the recrystallization inhibition effect is already completed if such amount is more than 1.0% by weight. Accordingly, more than 1.0% by weight of scandium added to the aluminum is not needed. In other words, the amount of scandium added by weight is sufficient to achieve the recrystallization inhibition effect. Al₃Sc is not highly soluble into aluminum even at a high temperature. Therefore, where 0.05% to 1.0% by weight of scandium is added, even if a reinforcing member is brazed to a spoke mounting opening, the brazing temperature does not cause the Al₃Sc to dissolve such that it continues to exist as Al₃Sc within alpha aluminum. Accordingly the recrystallization inhibition effect is exhibited.

In accordance with a third aspect of the present invention, the tire mounting part and the spoke mounting part of the bicycle rim include zirconium in addition to scandium.

Where zirconium and scandium are both added to aluminum, grain boundary migration is further minimized, and a superior recrystallization inhibition effect can be achieved. As a result, the occurrence of cracking can be further minimized.

In accordance with a fourth aspect of the present invention, the bicycle rim further includes multiple reinforcing members that are secured to the spoke mounting part at the areas of the mounting openings in order to increase the thickness of the spoke mounting part at the areas of the mounting openings, each of the reinforcing members having a hole configured to receive a spoke therein.

As described above, in an aluminum rim, the strength of the spoke mounting openings diminishes when the rim is made thinner. However, because a reinforcing member is mounted at each mounting opening according to this aspect, this reduction in strength can be minimized and/or prevented.

In accordance with a fifth aspect of the present invention, each of the reinforcing members includes a base that has a rim side surface that contacts an outer surface of the spoke mounting part and an outer surface that faces in an opposite direction from the rim side surface.

In accordance with a sixth aspect of the present invention, the reinforcing members are joined to the spoke mounting part of the bicycle rim via metal fusion. Preferably, the reinforcing members are joined to the outer surface of the spoke mounting part via metal fusion.

When the reinforcing members are joined to the outer surface of the spoke mounting part via metal fusion, heat is applied to the rim. When this occurs with prior rims, the aluminum crystal grains become coarse, and cracking may occur when stress is applied. However, when scandium is added to the aluminum, the recrystallization inhibition effect is exhibited and the occurrence of cracking can be minimized.

In accordance with a seventh aspect of the present invention, the reinforcing members are joined to the spoke mounting part of the rim via brazing. Preferably, the reinforcing members are joined to the outer surface of the spoke mounting part via brazing.

In this case as well, even though heat is applied to the rim as described in connection with the previous aspect, because scandium is added to the aluminum, the recrystallization inhibition effect is exhibited and the occurrence of cracking can be minimized.

As mentioned above, when zirconium is added to the aluminum in addition to the scandium in accordance with the present invention, grain boundary migration is further minimized, and a superior recrystallization inhibition effect can be achieved. As a result, the occurrence of cracking can be further minimized.

Using the invention described above, the bicycle rim can be made lightweight, the strength of the rim (especially at the spoke hole areas) can be maintained, and manufacturing can be made easier.

These and other objects, features, aspects and advantages of the present invention will become apparent to those skilled in the bicycle art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle wheel that includes a reinforced bicycle rim in accordance with a preferred embodiment of the present invention;
Figure 2 is a side elevational view of the reinforced rim of the wheel illustrated in Figure 1, with the tire and spokes removed for the purpose of illustration;
Figure 3 is an enlarged axial cross-sectional view of a section of the reinforced rim illustrated in Figure 2 indicated by the circle 3 (i.e., a cross-sectional view cut along the longitudinal plane of symmetry of the bicycle wheel);
Figure 4 is an enlarged partial cross-sectional view of the reinforced rim illustrated in Figures 1 and 2, as seen along section line 4-4 in Figure 2;
Figure 5 is an enlarged axial cross-sectional view of a section of the reinforced rim illustrated in Figure 2 indicated by the circle 5 (i.e., a cross-sectional view cut along the longitudinal plane of symmetry of the bicycle wheel);
Figure 6 is an enlarged partial cross-sectional view of the reinforced rim illustrated in Figures 1 and 2, as seen along section line 6-6 in Figure 2;
Figure 7 is an enlarged axial cross-sectional view of the section of the reinforced rim illustrated in Figure 2 indicated by the circle 3 (i.e., a cross-sectional view cut along the longitudinal plane of symmetry of the bicycle wheel);
Figure 8 is an enlarged partial cross-sectional view of the bicycle wheel illustrated in Figure 1, as seen along section line 8-8 of Figure 1;
Figure 9 is an enlarged partial cross-sectional view of the bicycle wheel illustrated in Figure 1, as seen along section line 8-8 of Figure 1, with the tire, spokes and reinforcing members removed for the purpose of illustration;
Figure 10 is an enlarged partial cross-sectional view of the bicycle wheel illustrated in Figures 1 and 8, as seen along section line 10-10 of Figure 1, with the tire and valve removed for the purpose of illustration;
Figure 11 is an enlarged inner end elevational view (i.e., an inner radial view) of one of the reinforcing members prior to transformation into the desired final configuration (i.e., in a preliminary-configuration) that is mounted to the inner annular part of the reinforced rim after transformation into the desired final configuration;
Figure 12 is an enlarged inner end elevational view (i.e., an inner radial view) of the reinforcing member for the bicycle rim illustrated in Figures 1-8 after the preliminary-configuration reinforcing member illustrated in Figure 11 indicated via the broken lines is transformed into the desired final configuration for mounting to the inner annular part of the reinforced rim;
Figure 13 is an outer end elevational view (i.e., an outer radial view) of the reinforcing member illustrated in Figure 12;
Figure 14 is a side (axial) elevational view of the reinforcing member illustrated in Figures 12 and 13;
Figure 15 is an opposite side (axial) elevational view of the reinforcing member illustrated in Figures 12-14;
Figure 16 is an end (circumferential) elevational view of the reinforcing member illustrated in Figures 12-16 as viewed along the arrow 16 in Figure 13;
Figure 17 is a cross-sectional view of the reinforcing member illustrated in Figures 12-16, as viewed along the section line 17-17;
Figure 18 is an enlarged top view showing a partial cross-sectional view of the hub for the bicycle wheel illustrated in Figure 1;
Figure 19 is an enlarged top view of the outer hub shell (barrel) of the bicycle wheel hub illustrated in Figure 18;
Figure 20 is a partial enlarged cross-sectional view of a part of the outer hub shell (barrel) illustrated in Figures 18 and 19 where a spoke nipple of the spoke is disposed in a spoke hole; and
Figure 21 is a right side elevational view of the parts of the hub and spoke with spoke nipple illustrated in Figure 20.

### DETAILED DESCRIPTION OF THE PREFERRED EMBODIMENTS

Selected embodiments of the present invention will now be explained with reference to the drawings. It will be apparent to those skilled in the bicycle art from this disclosure that the following descriptions of the embodiments of the present invention are provided for illustration only and not for the purpose of limiting the invention as defined by the appended claims and their equivalents.

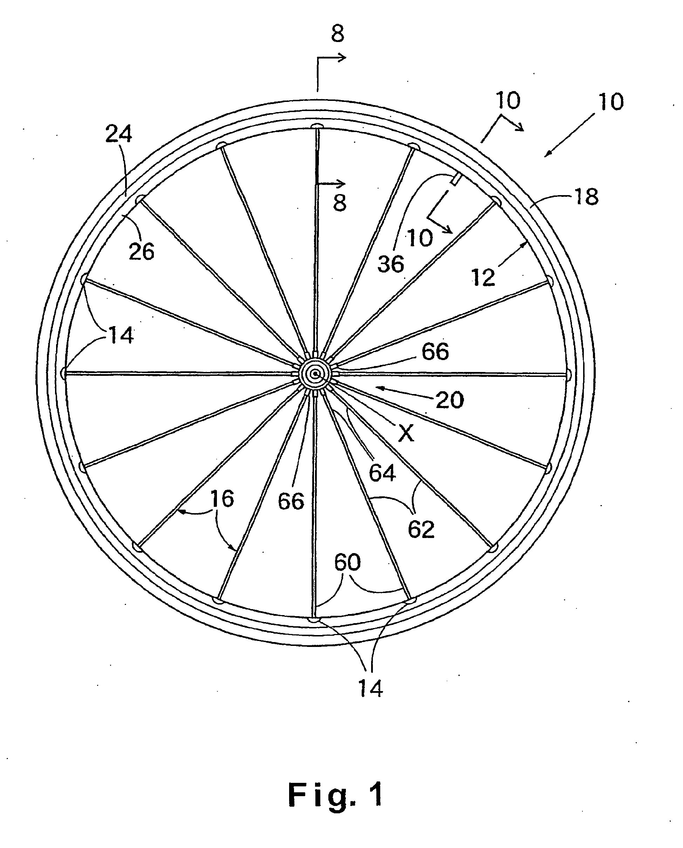

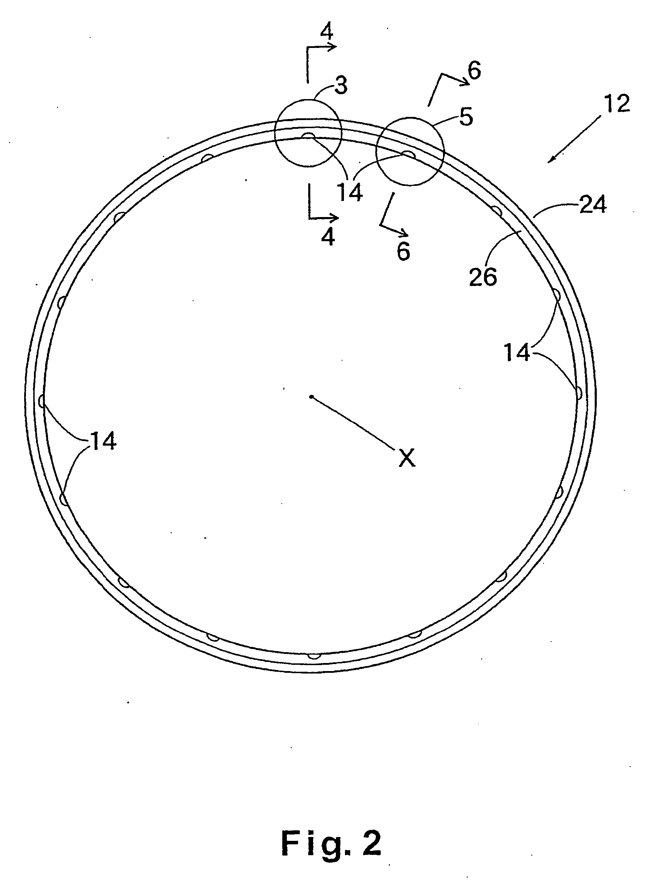

Referring initially to Figures 1 and 2, a bicycle wheel 10 is illustrated in accordance with a preferred embodiment of the present invention. The bicycle wheel 10 includes a reinforced rim 12 with multiple reinforcing members 14 secured thereto in accordance with the present invention. Securing the reinforcing members 14 to the rim 12 makes each reinforcing member 14 a part of the rim 12. As a result, the bicycle wheel 10 basically includes the rim 12 having the reinforcing members 14, multiple spokes 16, a pneumatic tire 18 and a center hub 20. The tire 18 may comprise a tube (not shown) and separate tire, or may comprise a tubeless tire such as that described and illustrated herein.

In the embodiment illustrated in the drawings, the spokes 16 are radial spokes that connect the hub 20 to the rim 12. In the embodiment illustrated in the drawings, the hub 20 is a front hub. Thus, the hub 20 does not have any sprockets mounted thereto. Sixteen radial spokes 16 are connected to the rim 12. The spokes 16 are aligned along the circumferential direction at equal intervals along the rim 12. Naturally, it will be apparent to those skilled in the bicycle art from this disclosure that the bicycle wheel 10 may include a different type of rim and/or hub utilizing a different spoking arrangement (for example, such as that in which all spokes are tangential spokes, or in which some spokes are tangential spokes and some are radial spokes). Moreover, where necessary and/or desired, it will be apparent to those skilled in the bicycle art from this disclosure that a bicycle wheel 10 having a different type of hub and/or rim involving the mounting of one or more sprockets may also be used. In either case, it is preferred that the spokes 16 be disposed at predetermined intervals (preferably equal intervals) along the annular rim 12 in the circumferential direction and connected to the rim 12 via reinforcing members 14.

The rim 12 is an annular member designed to rotate around a central axis X. The rim 12 is preferably formed from 6061 aluminum alloy with scandium (Sc) and zirconium (Zr) added thereto. The zirconium may be omitted. In other words, the zirconium is an optional material that is optionally added to the 6061 aluminum alloy with scandium (Sc) added thereto of the rim 12.

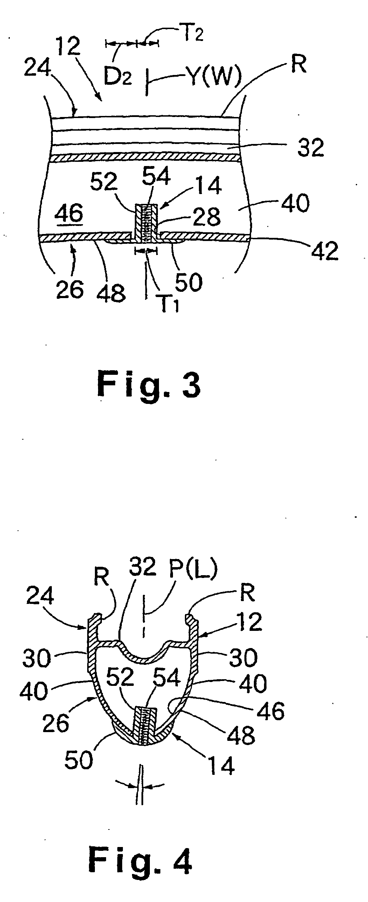

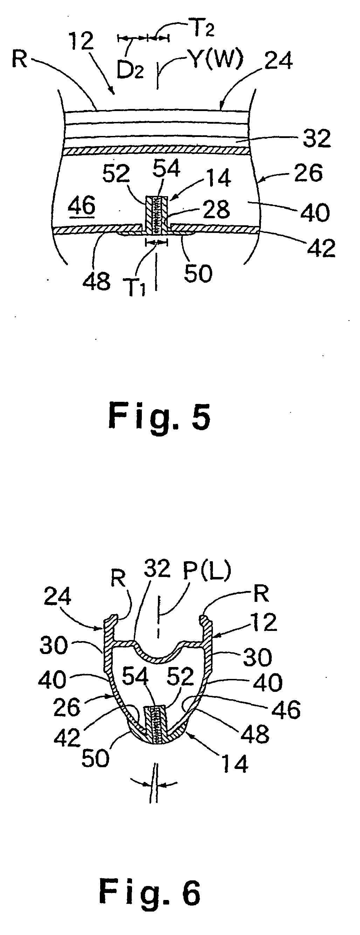

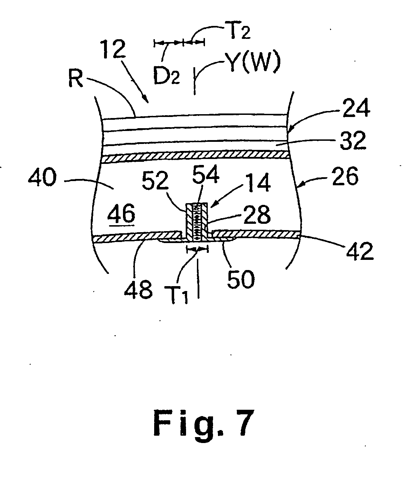

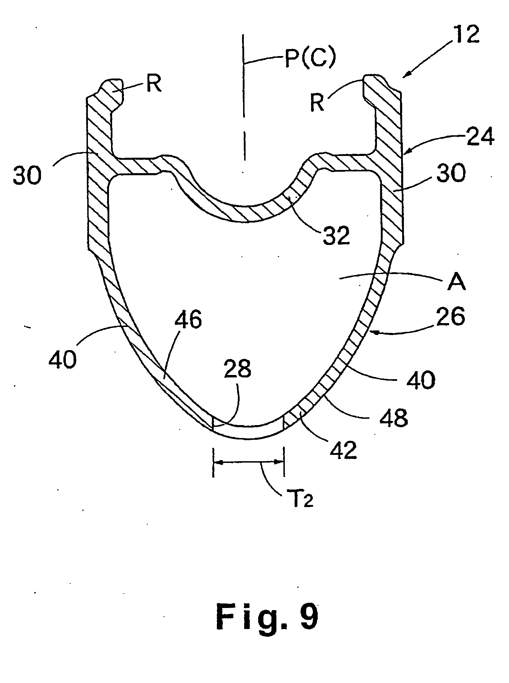

Referring to Figures 1 through 10, the rim 12 is essentially round, and basically includes an outer annular part 24, an inner annular part 26 having multiple mounting openings 28 formed therein. The multiple reinforcing members 14 are secured to the inner annular part 26 such that the rim 12 is reinforced at the mounting openings 28, as seen in the side elevation views of Figures 1 and 2. The outer annular part 24 is equivalent to the tire mounting part, and the inner annular part 26 is equivalent to the spoke mounting part. In other words, the annular outer part 24 is configured to have the tire 18 mounted thereto, while the inner annular part 26 is configured to have the spokes 16 mounted thereto via the reinforcing members 14. The outer configuration of the rim 12 is formed so as to have an essentially uniform cross-section excluding the area at which an opening is formed, as illustrated in Figures 4, 6, 8, 9 and 10.

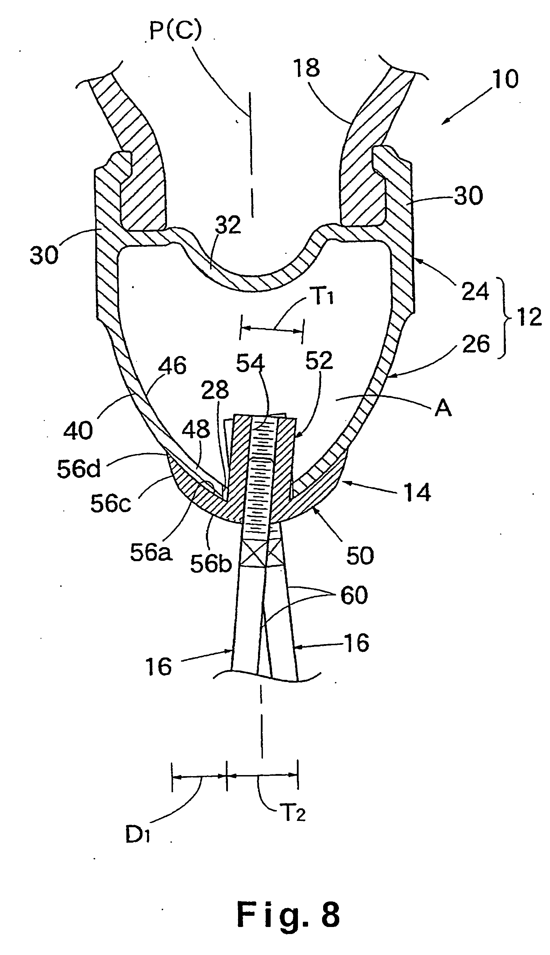

As is clearly seen in Figures 8-10, the inner annular part 26 is connected to the outer annular part 24 so as to form an annular empty space or region A. The inner annular part 26 has a U-shaped cross-sectional configuration. Both ends of the inner annular part 26 (U-shaped configuration) are connected to the sides of the outer annular part 24 such that they are axially opposed (face each other across the axial direction), thereby forming the annular empty space or region A. The outer annular part 24 also preferably has a substantially U-shaped cross-sectional configuration with the free ends constructed (configured) such that they can secure the tire 18 thereto.

The outer annular part 24 and the inner annular part 26 are integrally formed as a single unit using a method known in the prior art, such that they have an identical cross-sectional configuration over the entire circumference, except for the absence of material at the openings formed therein. For example, the outer and inner annular parts 24 and 26 can be formed by extruding a long piece of aluminum alloy (preferably including one or both of the additives mentioned above) having the cross-sectional configuration illustrated in Figures 8-10, bending this long piece of aluminum alloy into a round shape, and securing (i.e., welding) the ends of the bent piece of aluminum alloy to each other. Thus, preferably, the outer annular part 24 and inner annular part 26 are both formed from aluminum (Al) with scandium (Sc) and optionally zirconium (Zr) added thereto. In any case, the outer annular part 24 and inner annular part 26 preferably have a uniform material composition throughout the rim 12. The mounting openings 28 are formed via punching or drilling using a known method either before or after the free ends of the long piece of aluminum alloy are connected (welded) to each other.

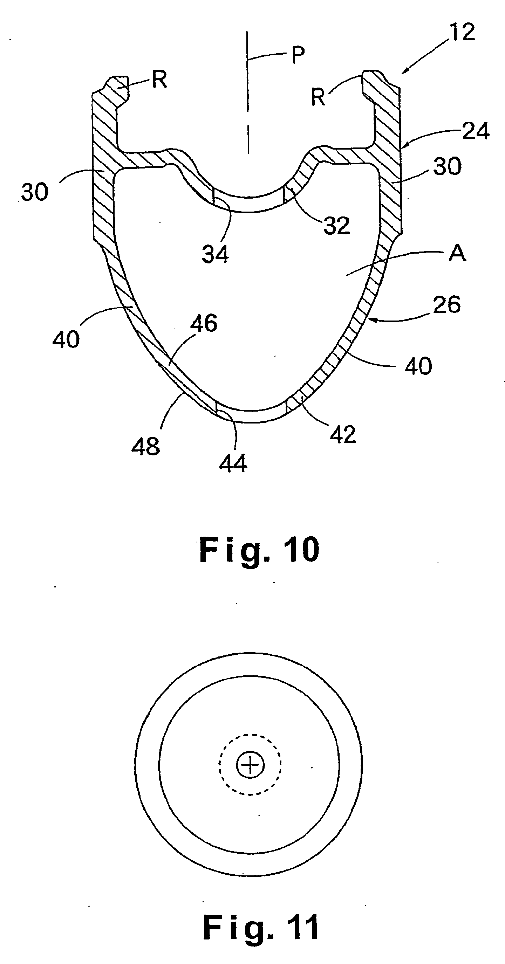

The reinforcing members 14 are preferably formed as aluminum alloy members separate from the outer and inner annular parts 24 and 26 via casting, mechanical processing and/or some other appropriate manufacturing method, such that they have the initial configuration illustrated in Figure 11. The reinforcing members 14 are then bent to have the desired final configuration illustrated in the remaining drawings. Alternatively, the reinforcing members 14 may be reshaped from the initial configuration to the final configuration via casting, mechanical processing and/or some other appropriate manufacturing method. Of course, it will be apparent to those skilled in the bicycle art from this disclosure that the reinforcing members 14 can be constructed of a material identical to the outer and inner annular parts 24 and 26 (i.e., aluminum alloy preferably including one or both of the additives mentioned above), or a different material as needed and/or desired. Preferably, the reinforcing members 14 are constructed of a material identical to the outer and inner annular parts 24 and 26.

In any case, the reinforcing members 14 are secured to the inner annular part 26 of the rim 12. It is preferred that the reinforcing members 14 be joined to the inner annular part 26 of the rim 12 via brazing or soldering, as described in detail below, in order to strengthen the rim 12. The outer and inner annular parts 24 and 26 each have cross-sections that are symmetrical relative to a plane of symmetry P perpendicular to the center axis X of the wheel 10. However, as described in detail below, due to the placement and angular orientation of the reinforcing members 14, the rim 12 is not completely symmetrical with respect to the plane of symmetry P. Therefore, when the reinforcing members 14 are connected to the inner annular part 26, the rim 12 preferably has a substantially symmetrical configuration relative to the plane of symmetry P of the wheel 10. In other words, the rim 12 is symmetrical prior to the securing of the reinforcing members 14 to the inner annular part 26.

As best seen in Figures 1-10, the outer annular part 24 basically includes a pair of axially opposed annular side sections (i.e., tire support sections) 30, and a connecting section (i.e., an annular outer bridge) 32. As seen in the cross-sectional representations of Figures 4, 6, 8, 9 and 10, the annular connecting section 32 extends between the annular side sections 30 so as to form an essentially U-shaped tire mounting receptacle. The side sections 30 are annular plate-like members each having a preferred thickness of about 1.1 to about 1.4 mm. Each side section 30 includes an annular tire support surface and an opposed annular braking surface.

The tire support surfaces of the annular side sections 30 are annular surfaces that face each other on either side of the plane of symmetry P. As in the prior art, the tire support surfaces each include an annular rib R formed at the free end of the annular side sections 30 that serve to secure the beads of the tire 18. The annular ribs R protrude toward each other from the tire support surfaces in the axial direction. The annular braking surfaces of the annular side sections 30 are annular opposing surfaces that face axially away from the plane of symmetry P and are configured to come into contact with a conventional rim brake (i.e. brake pads). The radially inner ends of the annular side sections 30 are connected to the inner annular part 26.

The annular connecting section 32 is a cylindrical (tubular-shaped) member having a uniform thickness of approximately 0.9 mm. As seen in Figures 8-10, the annular connecting section 32 has a variable outer configuration or shape that supports the tubeless tire 18 when it is mounted thereon. As seen in Figures 1 and 10, the annular connecting section 32 has a valve hole 34 formed therein to enable connection of a valve 36, in a conventional manner. The annular connecting section 32 is connected to the annular side sections 30 at a radial position between the radial inner and outer ends of the annular side sections 30. To enable the use of a tubeless tire such as the tire 18, it is preferred that no openings other than the single valve hole 34 exist in the annular connecting section 32.

Naturally, it should be apparent to a person skilled in the bicycle art from this disclosure that the tire 18 may also comprise a tube-equipped tire (not shown) and that the valve hole 34 can house the valve for a conventional tube (not shown). Accordingly, the valve hole 34 and/or the valve 36 may be designed to accommodate a conventional tubeless tire and/or a conventional tube-equipped tire. In either case, because the valve 36 is identical to that used in the prior art, the valve 36 will not be described or explained in detail herein.

Furthermore, as illustrated in Figures 1-10, the inner annular part 26 is a cylindrical member with curved surfaces and having a substantially U-shaped or substantially V-shaped cross-sectional configuration. The inner annular part 26 preferably has a uniform thickness of approximately 0.8 mm. The inner annular part 26 basically includes a pair of annular slanted sections 40 and an inner annular section 42 that is secured and connected to the slanted sections 40. The annular slanted sections 40, the inner annular section 42 of the inner annular part 26, and the annular side sections 30 and annular connecting section 32 of the outer annular part 24 are preferably integrally formed together as a one-piece, unitary member separate from the reinforcing members 14.

The multiple mounting openings 28 are formed in the inner annular section 42 and are configured (constructed) so as to permit mounting of the spokes 16 thereto via the reinforcing members 14. The outer radial ends of the slanted sections 40 are connected to the inner radial ends of the annular side sections 30 of the outer annular part 24. The inner radial ends of the slanted sections 40 are connected to the outer ends of the inner annular section 42. It is preferred that the mounting openings 28 of the inner annular section 42 comprise uniform round openings each having a central axis C that extends along the plane of symmetry P in the radial direction. The inner annular section 42 preferably includes sixteen of the mounting openings 28 disposed at equal intervals around the entire circumference of the rim 12.

As seen in Figures 1 and 10, the inner annular section 42 has one valve opening 44 formed therein so as to enable connection of the valve 36. As described above, the valve 36 is preferably constructed so as to permit the use of a tubeless tire such as the tire 18. However, it is equally acceptable if the tire 18 is a tube-equipped tire (not shown) and the valve opening 44 houses the valve for a conventional tire tube (not shown). In this way, the valve opening 44 and/or the valve 36 can be designed to accommodate a conventional tubeless tire and/or a conventional tube-equipped tire.

The inner annular section 42 and the annular slanted sections 40 together form an annular curved inner surface 46 and an annular curved outer surface 48 of the inner annular part 26. Each reinforcing member 14 is preferably joined to the outer surface 48 of the inner annular part 26 by being secured thereto via brazing or soldering. Each mounting opening 28 extends between the inner surface 46 and the outer surface 48 of the inner annular part 26. The mounting openings 28 are preferably identical to each other. Furthermore, each mounting opening 28 is constructed so that adjacent reinforcing members 14 can be angled in opposing directions in series about the rim 12, such that the corresponding spokes 16 extend toward opposite ends (sides) of the hub 20.

The reinforcing members 14 will now be described in more detail with reference to Figures 1-17. As described above, the reinforcing members 14 are preferably formed separately from the inner annular part 26. Each reinforcing member 14 preferably comprises a single member made of a lightweight, rigid (strong) metallic material. In particular, as described above, the reinforcing members are preferably made of aluminum or an aluminum alloy identical to the material of the outer and inner annular parts 24 and 26 of the rim 12. Most preferably, the reinforcing members 14 are preferably constructed from the same material as the outer and inner annular parts 24 and 26, and are joined to the inner annular part 26 (via brazing or soldering) in a non-detachable fashion such that they strengthen the rim 12. In order to reinforce the rim 12, the reinforcing members 14 effectively increase the thickness of the inner annular part 26 in the vicinity of the (spoke) mounting openings 28.

When the reinforcing members 14 are brazed or soldered to the inner annular part 26, a brazing metal or solder that is known in the field of bicycle technology and that is preferably different from the material of the reinforcing members 14 and the inner annular part 26 is used. It is preferred that the brazing metal or solder compound comprise a metal having a lower melting point than the metal used for the reinforcing members 14 and the inner annular part 26. For example, it is preferred that a brazing or soldering metal having a melting point of approximately 400°C-600°C be used when mounting the reinforcing members 14 to the inner annular part 26. This temperature is lower than the temperature typically required for welding when two rigid metals are to be fused together.

It is preferred that brazing or soldering using a brazing or soldering metal be employed as the method for mounting the reinforcing members 14 to the rim 12 of this invention, but where necessary and/or desirable, it will be apparent to those skilled in the bicycle art from this disclosure that a different technology for fusing and joining metal components, or a different method of joining entirely, may be used. For example, the reinforcing members 14 may be joined to the inner annular part 26 of the rim 12 using adhesive or cement (a material other than metal, for example) rather than brazing or soldering metal. Alternatively, the reinforcing members 14 may be welded (i.e. joined via metal fusion) onto the inner annular part 26 of the rim 12.

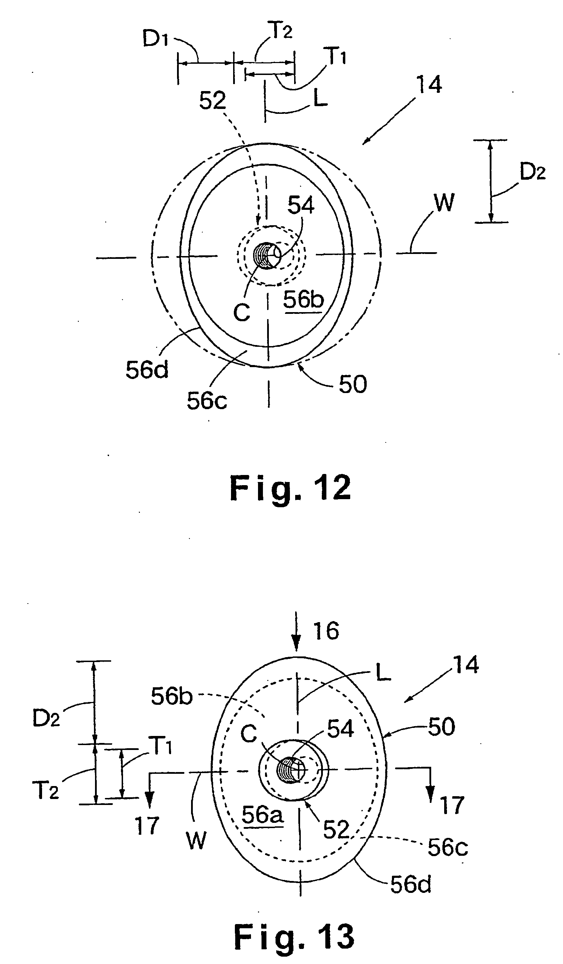

In this embodiment, each reinforcing member 14 has an essentially inverted mushroom configuration, as best seen in Figures 12-17. Furthermore, all of the reinforcing members 14 preferably have an identical configuration. Therefore, only one reinforcing member will be described and/or illustrated in detail herein. However, as best seen in Figures 1, 2, 3 and 5, it is preferred that adjacent reinforcing members 14 be oriented (inclined) in opposite directions when mounted in the mounting openings 28, whereby the corresponding spokes 16 extend toward the proper ends (sides) of the hub 20. As described above, the reinforcing members 14 are formed beforehand in a configuration having a flat base and a cylindrical part that runs perpendicular to the flat base, as best seen in Figure 11. As described below, the preliminary configuration is then modified into a desired final configuration having a curved based and an angled cylindrical part, as best seen in Figures 12-16.

More specifically, each reinforcing member 14 basically includes a base 50, a cylindrical part 52 that extends from the base 50, and a through-hole 54 that passes through both the base 50 and the cylindrical part 52, as illustrated in Figures 12-17. Preferably, the base 50 and the cylindrical part are integrally formed together as a one-piece, unitary member via casting, deforming and/or machining using conventional manufacturing techniques. One end of each spoke 16 is at least partially mounted inside the through-hole 54, whereby the hub 20 is connected to the rim 12. Specifically, the through-hole 54 is an opening having an internal thread that enables one of the spokes 16 to be connected by screwing it therein. In this way, the spokes 16 can be adjustably and detachably connected to the rim 12 via the respective reinforcing members 14.

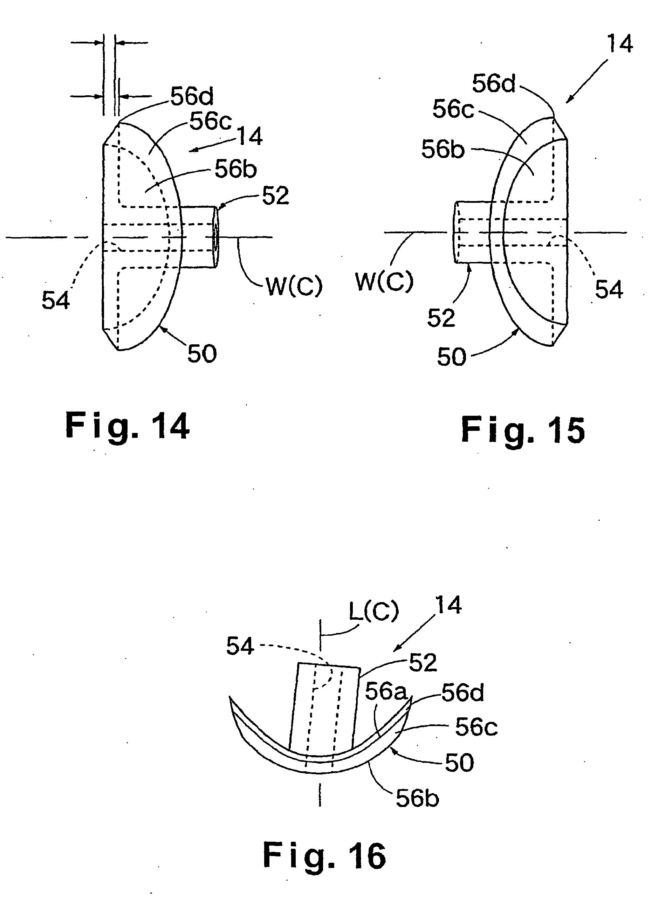

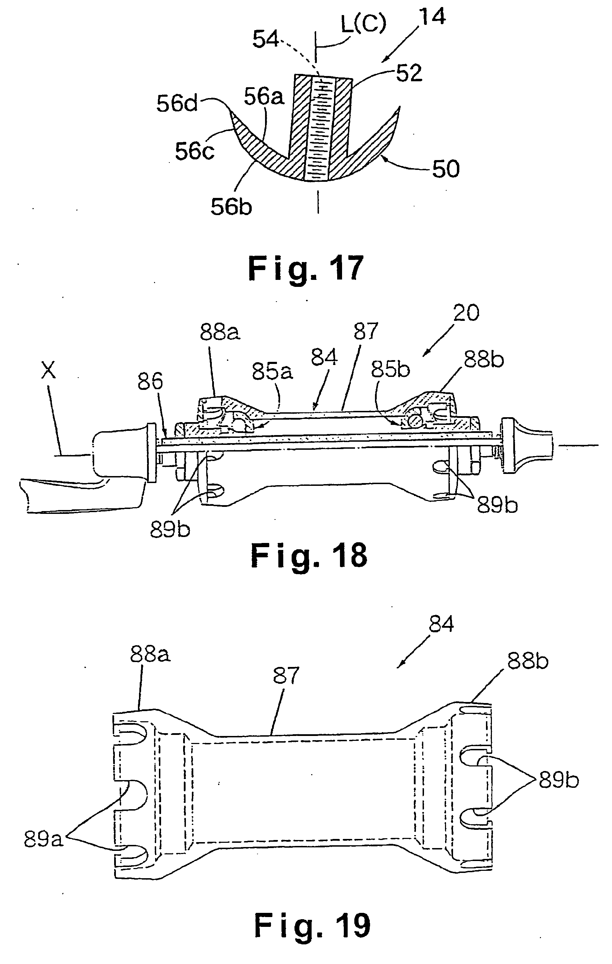

The base 50 is a bowl-shaped plate having a rim side surface 56a and an outer surface 56b. As seen in Figures 16 and 17, the base 50 has a curved surface configuration when viewed from a radial cross-sectional perspective. As can be seen from Figures 12-17, it is preferred that the base 50 be symmetrical with respect to a longitudinal plane of symmetry L and a lateral plane of symmetry W of each reinforcing member 14. The base 50 has an essentially oval configuration as viewed along the through hole 54. The rim side surface 56a has a surface configuration that corresponds to the surface configuration of the outer surface 48 of the inner annular part 26. With the exception of the section of the outer surface 56b that is tapered toward the rim side surface 56a at the outer periphery of the base 50, the outer side surface 56b has a surface configuration that is virtually identical to that of the rim side surface 56a.

Specifically, it is preferred that the base 50 include a tapered surface 56c that is formed around the outer periphery of the base 50 and is tapered toward an outer peripheral edge surface 56d. As can be determined from Figures 8, 14 and 16, due to the configuration of the tapered surface 56c and the peripheral edge surface 56d, the base 50 is preferably tapered with a minimum thickness of about 0.3 mm and a maximum thickness of about 1.0 mm so as to form the annular outer peripheral edge surface 56d. The tapered surface 56c (i.e., the taper area) decreases in thickness by 0.7 mm as it approaches the edge surface 56d. In any case, the peripheral edge surface 56d is formed between the rim side surface 56a and the tapered surface 56c of the base 50, and has a thickness of approximately 0.3 mm (i.e., approximately 30% of the maximum thickness of the base 50). Furthermore, when the reinforcing member 14 is secured to the inner annular part 26, the outer peripheral edge surface 56d forms a step between the base 50 and the outer surface 48 of the inner annular part 26. Therefore, the base 50 has a substantially uniform thickness except for the outer periphery thereof.

When each reinforcing member 14 is to be mounted to the inner annular part 26, brazing metal or soldering metal (not shown) is melted in order to join the rim side surface 56a of the reinforcing member 14 to the outer surface 48 of the inner annular part 26. After the brazing metal or soldering metal is melted, an extremely thin joining layer (not shown) secures the reinforcing member 14 to the inner annular part 26.

The cylindrical part 52 of each reinforcing member 14 extends from the base 50 into one of the mounting openings 28. The cylindrical parts 52 of reinforcing members 14 preferably form angles of 6° in opposing directions in an alternating manner relative to the plane of symmetry P and the longitudinal plane L such that the spokes 16 extend toward the appropriate ends of the hub 20. In other words, it is preferred that the cylindrical part 52 of each reinforcing member 14 have a diameter T₁ that is slightly smaller than that of the mounting opening 28 (i.e., a preferred diameter of about 4.3 mm) to enable adjacent (alternating) spokes 16, and therefore, the cylindrical parts 52 of adjacent (alternating) reinforcing members 14 to be mounted such that they are angled relative to the above mentioned planes P and L in alternating opposite directions. It is further preferred that the mounting openings 28 have a minimum diameter T₂ of approximately 5.0 mm in order to enable them to house the cylindrical parts 52 of the reinforcing members 14 at alternating opposing angles relative to the above mentioned planes P and L. As can be easily seen from Figures 3, 5 and 7, the cylindrical part 52 of each reinforcing member 14 is preferably mounted such that it forms an angle of approximately zero degrees circumferentially relative to the radial line Y as viewed in the axial direction. The rim 12 has multiple radial lines Y that extend from the rotational axis X outward toward the center of each reinforcing member 14.

However, when the cylindrical part 52 is housed in the mounting opening 28, it is preferred that the two ends of the base 50 that face each other across the axial direction (i.e., the opposing sides of the base 50 as viewed circumferentially) have the same radial position, as best seen in Figure 8. As a result, as illustrated in Figure 8 and Figures 12-17, each reinforcing member 14 is not completely or exactly symmetrical relative to the plane of symmetry P that coincides with the longitudinal plane L of the reinforcing member 14. In other words, even though the base 50 of each reinforcing member 14 is formed symmetrically relative to the planes L and P, the entire reinforcing members 14 are not completely symmetrical relative to these planes P and L due to the angular orientation (placement) of the cylindrical parts 52.

Naturally, from this discussion, it will be apparent to those skilled in the bicycle art from this disclosure that the reinforcing members 14 could be constructed to be completely symmetrical if needed and/or desired. With this modification, the mounting openings 28, the outer surface 48 and the rim side surfaces 56a should be configured such that the bases 50 of the reinforcing members 14 are disposed at slight angles such that the cylindrical parts 52 are disposed at slight angles within the mounting openings 28 relative to the rim's plane of symmetry P (i.e., such that adjacent alternating reinforcing members 14 are inclined and/or offset slightly in opposite directions relative to the plane of symmetry) such that as a result the spokes 16 extend to opposite ends of the hub 20. This placement will mean that a small amount of play should be provided in the mounting openings 28 of the rim 12.

As can be seen from Figures 3, 5, 7, 8, 12 and 13, each of the reinforcing members 14 has a first overlap dimension D₁ and a second overlap dimension D₂ that correspond to the minimum and maximum amounts by which the reinforcing member 14 covers the inner annular part 26, respectively. The first and second overlap dimensions D₁ and D₂ are measured laterally relative to the center axis C of the mounting opening 28. Specifically, the first and second overlap dimensions D₁ and D₂ are essentially measured in the axial direction and the circumferential direction of the rim, respectively. Therefore, the actual overlap dimension by which the reinforcing member 14 covers the inner annular part 26 varies between the first and second overlap dimensions D₁ and D₂. As can be seen from Figures 16 and 17, an angle is formed between the center of the cylindrical part 52 and the center axis C. Covering the inner annular part 26 with the reinforcing member 14 functions to distribute the stress exerted by the spoke 16 on the rim 12.

The maximum lateral dimension of each mounting opening 28 is defined as T₂. The first overlap dimension D₁ is larger than one-half of the maximum lateral dimension T₂, while the second overlap dimension D₂ is larger than the maximum lateral dimension, i.e., is larger than the diameter T₂. In any case, the second (maximum) overlap dimension D₂ is larger than one-half of the maximum lateral dimension T₂.

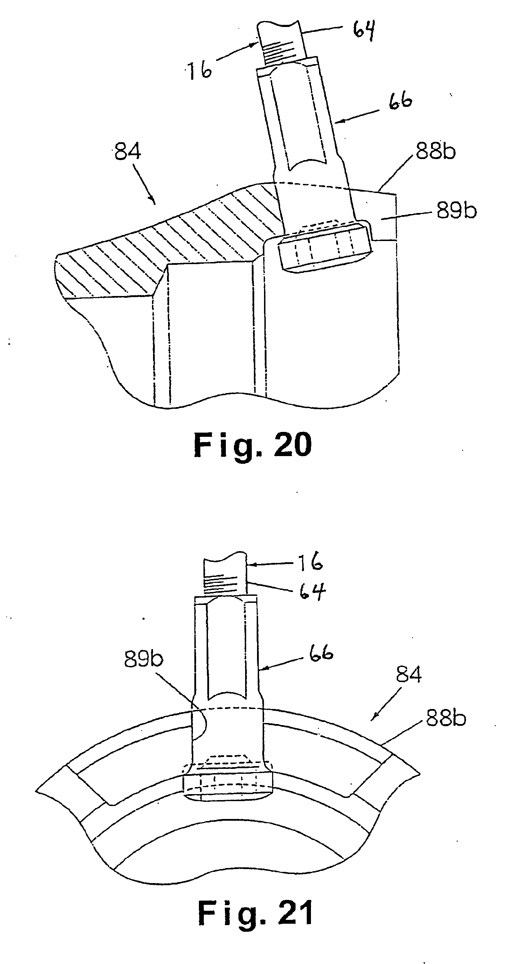

The spokes 16 and the hub 20 will now be explained with reference to Figures 1, 2, 8 and 18-21. The spokes 16 are all preferably identical to each other. Each spoke 16 basically includes an outer end 60, an elongated center part 62, an inner end 64, and a spoke nipple 66. The outer end 60, center part 62 and inner end 64 of each spoke 16 are preferably integrally formed as a one-piece, unitary single member (integral member) using conventional manufacturing techniques. The spoke nipple 66 is preferably formed as a separate member in a conventional manner.

The outer end 60 of each spoke 16 includes a male screw thread that engages with the threaded through-hole formed in the reinforcing member 14. At the same time, the inner end 64 of each spoke 16 includes a male screw thread by which the spoke is screwed into a corresponding spoke nipple 66. Furthermore, the outer end of each spoke includes a square part used to rotate the spoke 16. As in the conventional art, the spoke 16 is disposed such that tension can be applied between the hub 20 and the annular rim 12 by rotating the spoke nipple 66 and/or the spoke 16. The spoke 16 is preferably a conventional wire-type spoke. With the exception of the manner in which it is connected to the rim 12, the spoke 16 is not described and/or illustrated in detail herein.

Next, the connection between the spokes 16 and the hub 20 will be explained in detail with reference to Figures 18-21. Except as described below, the connection between the spokes 16 and the hub 20 is basically identical to the connection disclosed in U.S. Patent 6,431,658. Specifically, the hub 20 is the hub disclosed in U.S. Patent 6,431,658 that has undergone a design change to permit it to be used with a rim 12 having spoke mounting positions disposed at equal intervals around the circumference thereof. Naturally, the rim 12 of the present invention can be connected to a hub comprising a variation that includes a rear sprocket, i.e., a hub comprising the rear hub disclosed in U.S. Patent 6,431,658 and having modified spoke mounting positions that are disposed at equal intervals along the circumferential direction as disclosed herein.

Furthermore, the connection between the spokes 16 and rim 12 to the hub 20 will be explained in detail with reference to Figures 18-21. The hub 20 basically includes a cylindrical hub shell (barrel) 84, first and second bearing assemblies 85a and 85b, and a hub shaft 86 that is rotatably supported and connected to the hub shell (barrel) 84 by the bearing assemblies 85a and 85b. The components of the hub 20 are essentially identical to components disclosed in the prior art.

The hub shell (barrel) 84 includes a cylindrical center part 87 and cylindrical mounting areas 88a and 88b disposed at opposite ends of the center part 87. The mounting areas 88a and 88b are used for mounting of the spokes 16 to the hub 20. Each cylindrical mounting area 88a and 88b includes multiple spoke openings 89a and 89b, respectively, that are used for connecting the spokes 16. It is preferred that eight spoke openings 89a and eight spoke openings 89b be formed in the mounting parts 88a and 88b, respectively.

It is preferred that the second mounting area 88b comprise an offset mirror image of the first mounting area 88a. In other words, it is preferred that the spoke openings 89b be offset from the spoke openings 88a in the circumferential direction such that the outer ends 64 of the spokes 16 are disposed at equal intervals. The annular mounting parts 88a and 88b support the spokes 16 within the spoke openings 89a and 89b in which spoke nipples 66 are fitted.

In the preferred embodiment discussed above, the present invention was applied to a rim 12 in which reinforcing members 14 are secured at spoke mounting openings 28. However, the present invention may also be applied equally to a rim in which the areas around the spoke holes are strengthened via burring during the application of heat. In other words, a rim in which the areas around the spoke holes are strengthened via burring during the application of heat can be constructed with an aluminum alloy (e.g. 6061 aluminum) with scandium (Sc) and optionally zirconium (Zr) added thereto in accordance with the present invention, as explained herein. In such a rim, even though heat is applied to the rim, because scandium is added to the aluminum, the recrystallization inhibition effect is exhibited and the occurrence of cracking can be minimized. Moreover, when zirconium is added to the aluminum in addition to the scandium in accordance with the present invention, grain boundary migration is further minimized, and a superior recrystallization inhibition effect can be achieved. As a result, the occurrence of cracking can be further minimized.

In one preferred example of the present invention, the rim 12 is formed from 6061 aluminum alloy to which 0.2% by weight of scandium is added. In this case, the hardness of the areas surrounding the spoke mounting openings 28 after the reinforcing members 14 are joined to the inner annular part 26 at the spoke mounting openings 28 via brazing is 10% higher than an aluminum alloy rim where no scandium is added, thereby improving hardness (performance).

In another preferred example of the present invention, the rim 12 is formed by adding 0.1% by weight of zirconium to 6061 aluminum alloy that also includes 0.2% by weight of scandium. In this case, the hardness of the areas surrounding the spoke mounting openings 28 after the reinforcing members 14 are joined to the inner annular part 26 at the spoke mounting openings 28 via brazing is 10-20% higher than aluminum alloy rim where no scandium or zirconium is added, thereby further improving hardness (performance).

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies. While only selected embodiments have been chosen to illustrate the present invention, it will be apparent to those skilled in the bicycle art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle rim (12) comprising:
an annular tire mounting part (24) configured to have a tire (18) mounted thereto; and
an annular spoke mounting part (26) including multiple mounting openings (28) disposed at predetermined intervals along a circumferential direction thereof, the rim (12) further includes multiple reinforcing members (14) that are secured to the spoke mounting part (26) at the areas of the mounting openings (28),
**characterized in that**
the tire mounting part (24) and the spoke mounting part (26) including aluminium and scandium,
wherein each of the reinforcing members (14) includes a hole (54) configured to receive a spoke therein and a base (50) that has a rim side surface (56a) that contacts an outer surface (48) of the spoke mounting part (26) and an outer surface (56b) that faces in an opposite direction from the rim side surface (56a).

2. The bicycle rim according to claim 1, wherein
the tire mounting part (24) and the spoke mounting part (26) include scandium within a range from 0.05% to 1.0% by weight.

3. The bicycle rim according to claim 1 or 2, wherein
the tire mounting part (24) and the spoke mounting part (26) include zirconium.

4. The bicycle rim according to claim 1, 2 or 3, wherein
the rim (12) further includes multiple reinforcing members (14) that are secured to the spoke mounting part (26) at the areas of the mounting openings (28) in order to increase the thickness of the spoke mounting part (26) at the areas of the mounting openings, each of the reinforcing members (14) having a hole configured to receive a spoke (16) therein.

5. The bicycle rim according to anyone of claims 1 to 4, wherein
the reinforcing members (14) are joined to the spoke mounting part (26) via metal fusion.

6. The bicycle rim according to anyone of claims 1 or 4, wherein
the reinforcing members (14) are joined to the spoke mounting part (26) via brazing.

7. The bicycle rim according to claim 5 or 6, wherein
the reinforcing members (14) are joined to the outer surface of the spoke mounting (26).

## Patentansprüche

1. Fahrradfelge (12), umfassend:
einen ringförmigen Reifenmontagepart (24), konfiguriert, um einen Reifen (18) daran montiert zu haben; und
einen ringförmigen Speichenmontagepart (26), umfassend mehrere Montageöffnungen (28), angeordnet an vorbestimmten Intervallen entlang einer Umfangsrichtung davon,
wobei die Felge (12) ferner mehrere Verstärkungselemente (14) umfasst, die an dem Speichenmontagepart (26) an Bereichen der Montageöffnungen (28) gesichert sind,
**dadurch gekennzeichnet, dass**
der Reifenmontagepart (24) und der Speichenmontagepart (26) Aluminium und Scandium umfassen,
wobei jedes der Verstärkungselemente (14) ein Loch (54) umfasst, konfiguriert, um eine Speiche darin aufzunehmen, und eine Basis (50), die eine Felgenseitenfläche (56a) aufweist, die eine Außenfläche (48) des Speichenmontageparts (26) kontaktiert, und eine Außenfläche (56b), die in eine entgegengesetzte Richtung bezüglich der Felgenseitenfläche (56a) gerichtet ist.

2. Fahrradfelge gemäß Anspruch 1, wobei der Reifenmontagepart (24) und der Speichenmontagepart (26) Scandium im Bereich von 0,05 bis 1,0 Gewichtsprozent umfassen.

3. Fahrradfelge gemäß Anspruch 1 oder 2, wobei der Reifenmontagepart (24) und der Speichenmontagepart (26) Zirkonium umfassen.

4. Fahrradfelge gemäß Anspruch 1, 2 oder 3, wobei die Felge (12) ferner mehrere Verstärkungselemente (14) umfasst, die an dem Speichenmontagepart (26) an den Bereichen der Montageöffnungen (28) gesichert sind, um die Dicke des Speichenmontageparts (26) an den Bereichen der Montageöffnungen zu erhöhen, wobei jedes der Verstärkungselemente (14) ein Loch aufweist, konfiguriert, um eine Speiche (16) darin aufzunehmen.

5. Fahrradfelge gemäß einem der Ansprüche 1 bis 4, wobei die Verstärkungselemente (14) an den Speichenmontagepart (26) über Metallfusion verbunden sind.

6. Fahrradfelge gemäß einem der Ansprüche 1 bis 4, wobei die Verstärkungselemente (14) über Löten mit dem Speichenmontagepart (26) verbunden sind.

7. Fahrradfelge gemäß Anspruch 5 oder 6, wobei die Verstärkungselemente (14) mit der Außenfläche des Speichenmontageparts (26) verbunden sind.

## Revendications

1. Jante de bicyclette (12) comprenant:
une partie de montage de pneu annulaire (24) configurée pour qu'un pneu (18) y soit monté, et
une partie de montage de rayon annulaire (26) comprenant des ouvertures de montage (28) multiples disposées à des intervalles prédéterminés le long d'une direction circonférentielle de la partie de montage (26), la jante (12) comprenant, en outre, des éléments de renforcement multiples (14) qui sont fixés à la partie de montage de rayon (26) au niveau des zones des ouvertures de montage (28),
**caractérisée en ce que**
la partie de montage de pneu (24) et la partie de montage de rayon (26) comprennent de l'aluminium et du scandium, chacun des éléments de renforcement (14) comprend un trou (54) configuré pour y recevoir un rayon et une base (50) qui a une surface côté jante (56a) en contact avec une surface externe (48) de la partie de montage de rayon (26) et une surface externe (56b) qui fait face dans une direction opposée à la surface côté jante (56a).

2. Jante de bicyclette selon la revendication 1, dans laquelle la partie de montage de pneu (24) et la partie de montage de rayon (26) comprennent du scandium dans une quantité allant de 0.05% à 1.0% en poids.

3. Jante de bicyclette selon la revendication 1 ou 2, dans laquelle la partie de montage de pneu (24) et la partie de montage de rayon (26) comprennent du zirconium.

4. Jante de bicyclette selon la revendication 1, 2 ou 3, dans laquelle la jante (12) comprend, en outre, des éléments de renforcement multiples (14), qui sont fixés à la partie de montage de rayon (26) au niveau des zones des ouvertures de montage (28) afin d'augmenter l'épaisseur de la partie de montage de rayon (26) au niveau des zones des ouvertures de montage, chacun des éléments de renforcement (14) ayant un trou configuré pour y recevoir un rayon (16).

5. Jante de bicyclette selon l'une quelconque des revendications 1 à 4, dans laquelle les éléments de renforcement (14) sont joints à la partie de montage de rayon (26) par fusion métallique.

6. Jante de bicyclette selon l'une quelconque des revendications 1 à 4, dans laquelle les éléments de renforcement (14) sont joints à la partie de montage de rayon (26) par brasage.

7. Jante de bicyclette selon la revendication 5 ou 6, dans laquelle les éléments de renforcement (14) sont joints à la surface externe de la partie de montage de rayon (26).
